# EUROPEAN PATENT SPECIFICATION

(11) **EP 1 767 303 B1**
(45) Date of publication and mention of the grant of the patent: **03.12.2014**
(21) Application number: 05751537.1
(22) Date of filing: 03.06.2005
(51) Int. Cl.: B23K 1/00

(54) **PARTS EQUIPPED WITH BRACKET**
MIT HALTERUNG AUSGERÜSTETE TEILE
PIÈCES ÉQUIPÉES D'UNE PATTE DE FIXATION

(30) Priority: 08.07.2004 JP 2004201346
(43) Date of publication of application: 28.03.2007
(73) Proprietor: Sanoh Industrial Co., Ltd, Koga-shi, Ibaraki 306-0023 (JP)
(72) Inventor: MATSUNAGA, Hideaki, Koga-shi, Ibaraki 306-0041 (JP)
(74) Representative: Fiener, Josef
(86) International application number: PCT/JP2005/010638
(87) International publication number: WO 2006/006329

(56) References cited:
- JP-A- 63 165 068
- JP-A- 63 165 068
- JP-U- 5 071 684
- JP-U- 05 071 684
- JP-U- 53 157 129

## Description

### TECHNICAL FIELD

The present invention relates to a component provided with a bracket, and more particularly to a component provided with a bracket suitable for joining the bracket and the component body by furnace soldering or carrying out plating on the bracket and the component body as disclosed in the preamble of claim 1.

### BACKGROUND ART

In components such as the inflators employed in side air bags for example, the inflator housing is attached to the attachment target portion, such as a car body or a seat back, by way of a bracket.

In such cases, the end portion of the bracket is welded to the inflator housing as described in Japanese Patent Application Laid-open No. 2001-63511 for example. Moreover, beads are generally formed on such brackets for the purpose of reinforcing the brackets.

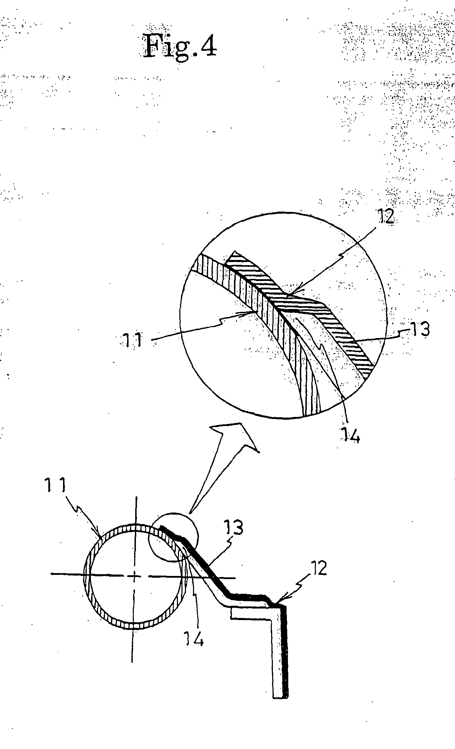

In this regard, as shown in FIG. 4, when a bracket 12 is joined to an inflator housing 11 by furnace soldering, due to air resistance or the like, the solder material sometimes does not flow into a cavity portion 14 that is formed by a peripheral surface of the inflator housing 11 and a concave portion of a bead 13 on the bracket 12, such that there is a risk of deficient soldering. Furthermore, in the case of carrying out plating, a plating liquid that enters the cavity portion 14 in a plating tank may remain inside the cavity portion 14 due to tension or the like even after [the work] is raised out of the plating tank, which poses a risk of corrosion if left as it is. JP 5-7 16 84 discloses a component as described in the preamble of claim 1.

Accordingly, with the foregoing in view, it is an object of the present invention to provide a component provided with a bracket, in which soldering deficiencies seldom occur when soldering a bracket that has a bead to the component body, and moreover, in which plating liquid does not remain when plating is carried out.

### DISCLOSURE OF THE INVENTION

In order to solve the above-described problems, in the present invention, a component comprising a bracket in which the bracket having a beads formed thereon so as to reinforce the bracket is joined to a component body such that an end portion of said bead faces the component body, then the component and the jointed bracket are plated, characterized in that a hole is provided penetrating the end portion of said bead, and a cavity portion defined by said beads on said bracket and the component body is made open to outside through said hole.

Here, the shape of the component may be any shape.

With a component provided with a bracket according to the present invention, when the bracket is joined to the component body by soldering and when the soldering material enters a cavity portion formed by the component body and the bracket, the cavity portion is made open to the outside through the hole, and therefore the soldering material is not easily affected by resistance due to air and can easily enter the juncture portion between the component body and the bracket, thereby soldering can be performed stably. Furthermore, when a component, in which a bracket has been joined to the component body, undergoes plating, even if the plating liquid or the like enters the cavity portion, there is no risk that the plating liquid remains in the cavity portion since it is released outside from the hole formed at the end portion of the bead.

Consequently, it is possible to achieve a component provided with a bracket having good quality.

Furthermore, in the present invention, a width of the hole is formed not less than the inner width of the bead.

Here, the shape of the hole is not limited to a round shape and may be a shape that allows withdrawal of the curved portion of the end portion of the bead.

With a component provided with a bracket according to the present invention, the end portion of the cavity portion formed by the component body and the bead of the bracket is made completely open to the outside, and therefore the soldering material very reliably enters the juncture portion between the component body and the bracket when soldering is performed. Furthermore, when plating is performed, plating liquid that has entered the cavity portion does not remain there and is completely released to the outside.

Consequently, it is possible to achieve a component provided with a bracket having good quality.

According to the present invention, said hole is so formed that the plating liquid can be easily released to the outside. The hole in a component comprising a bracket, according to the present invention, functions well not only for releasing gas at soldering, but also for releasing plating liquid from the inner cavity portion to the outside, in spite of a high viscosity and high surface tension of plating liquid. The plating liquid, thus, can be perfectly removed from the inner cavity. As a result, it is possible to achieve a component provided with a bracket being well plated with no risk of corrosion and having high durability

### BRIEF DESCRIPTION OF THE DRAWINGS

FIG. 1 is a perspective view schematically showing a portion of an inflator of a side air bag as a component provided with a bracket according to the present invention;
FIG. 2 is a cross-sectional view along a line A-A in FIG. 1;
FIGS. 3(a) and 3(b) show brackets as viewed from the rear, with FIG. 3 (a) being a bracket on which two thin beads are formed and FIG. 3 (b) being a bracket on which two thick beads are formed; and
FIG. 4 is a cross-sectional view of a component provided with a bracket of a conventional structure in which the bracket is joined to the inflator housing.

### BEST MODE FOR CARRYING OUT THE INVENTION

The following is a detailed description of the present invention using an inflator of a side air bag as an example of a component provided with a bracket, with reference to the accompanying drawings.

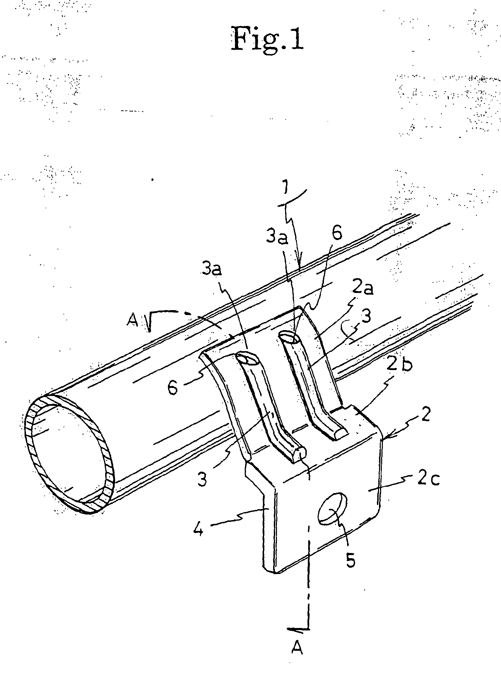

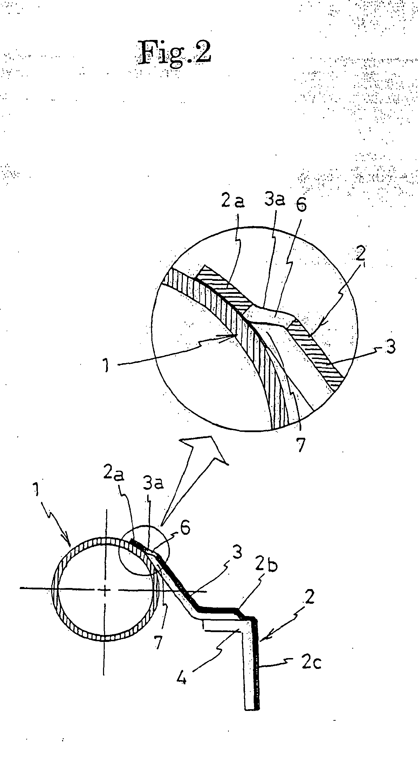

The inflator shown in FIGS. 1 and 2 is structured such that a bracket 2 is joined to a cylindrical inflator housing 1.

The bracket 2 is formed in a substantial crank-shape in a longitudinal direction and two beads 3 are formed spanning from an end portion 2a to an intermediate portion 2b. Furthermore, at the intermediate portion 2b and a base portion 2c of the bracket 2, flanges 4, 4 are formed facing inward from side portions thereof, and a hole 5 is formed at a central portion in the width direction of the base portion 2c, for attaching the bracket 2 to a car body or seat (not shown) or the like.

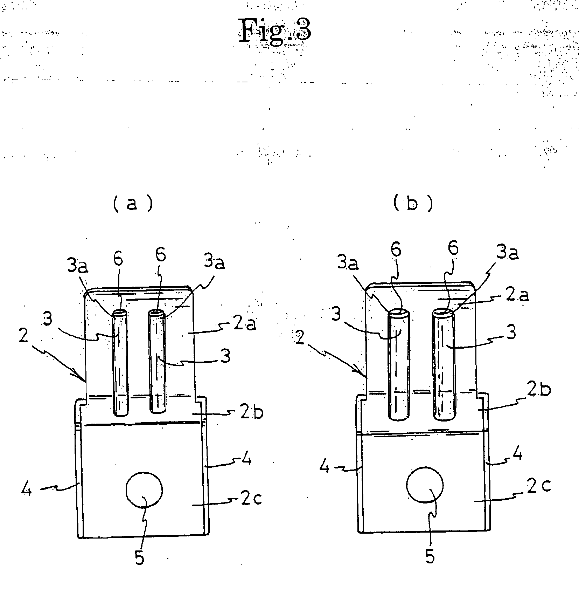

Furthermore, in the bracket 2, holes 6 are provided penetrating through end portions 3a of the beads 3. It is preferable that the holes 6 are formed so as to have a width not less than the inner width of the beads 3 as shown in FIGS. 3(a) and 3(b), but the shape thereof is not limited to a round shape, and may be a shape that allows withdrawal of the curved portion of the end portions 3a of the beads 3.

As shown in FIG. 2, the end portion 2a of the bracket 2 is brought into contact with the peripheral surface of the inflator housing 1 such that the end portions 3a of the beads 3 touch the peripheral surface thereof. In this state, [the bracket is] provisionally attached to the inflator housing 1 using resistance welding or TIG welding or the like, and then furnace soldering is carried out.

At this time, a soldering material enters a cavity portion 7 formed by the peripheral surface of the inflator housing 1 and an inner surface of the end portion 3a of the bead 3 of the bracket 2, and the soldering material flows into the entire juncture portion between the inflator housing 1 and the bracket 2 of the cavity portion 7, such that the juncture portion is uniformly joined.

Following this, the inflator housing 1 to which the bracket 2 is joined undergoes plating.

At this time, the plating liquid enters the cavity portion 7, but the plating liquid does not remain in the cavity portion 7 since it escapes outward from the holes 6.

In this way, the inflator housing 1, to which the bracket 2 is soldered and which undergoes plating, is fastened to a car body or a seat (not shown) or the like using a bolt (not shown) that inserts through the hole 5.

It should be noted that a component provided with a bracket, in which the bracket 2 was joined to the inflator housing 1, was shown in the abovementioned embodiment, but of course the structure of the present invention can be applied to components provided with other brackets.

### INDUSTRIAL APPLICABILITY

With a component provided with a bracket according to the present invention described above, soldering can be performed stably when the bracket is joined to the component body by soldering and, moreover, it is possible to achieve uniform plating without plating liquid remaining in the cavity portions of the beads when the component, to which the bracket has been joined, undergoes plating. For this reason, the present invention can be used for all components provided with a bracket, on which a bead is formed and which is joined to the component body such that an end portion of the bead faces the component.

## Claims

1. A component comprising a bracket (2) formed in a substantial crank-shape in a longitudinal direction, said bracket (2) having a bead (3) formed thereon reinforcing said bracket (2), said bead (3) defining a cavity portion (7) between the bracket (2) and a component body (1), wherein said bracket (2) is joined to the component body (1), such that an end portion (3a) of said bead (3) faces the component body (1), wherein the cavity portion (7) is made open to outside through a hole (6),
**characterized in that**
said hole (6) is provided at the curved portion of the end portion (3a) of the bead (3) and penetrates the end portion (3a) of said bead (3), so that plating liquid can flow out through the hole (6) when the joined bracket (2) and the component body (1) are plated.

2. The component comprising a bracket (2) according to claim 1, **characterized in that** a width of said hole (6) is formed not less than an inner width of said bead (3).

## Patentansprüche

1. Bauteil, umfassend einen in Längsrichtung weitgehend kurbelförmig geformten Bügel (2) mit einem daran angeformten Wulst (3) zur Verstärkung des Bügels (2), wobei der Wulst (3) zwischen dem Bügel (2) und einem Bauteilkörper (1) einen Hohlraumabschnitt (7) definiert, wobei der Bügel (2) mit dem Bauteilkörper (1) so verbunden ist, dass ein Endabschnitt (3a) des Wulstes (3) zum Bauteilkörper (1) hin liegt und der Hohlraumabschnitt (7) durch ein Loch (6) nach außen hin offen ist,
**dadurch gekennzeichnet, dass**
das Loch (6) am Krümmungsbereich des Endanschnitts (3a) des Wulstes (3) vorgesehen ist und den Endabschnitt (3a) des Wulstes (3) durchdringt, so dass Plattierungsflüssigkeit durch das Loch (6) abfließen kann, wenn der zusammengefügte Bügel (2) und Bauteilkörper (1) plattiert werden.

2. Bauteil umfassend einen Bügel (2) nach Anspruch 1, **dadurch gekennzeichnet, dass** eine Breite des Lochs (6) nicht geringer als eine innere Breite der Wulst (3) ist.

## Revendications

1. Composant comprenant un support (2) formé sensiblement selon une forme de manivelle dans une direction longitudinale, ledit support (2) ayant un bourrelet (3) formé sur ce dernier, renforçant ledit support (2), ledit bourrelet (3) définissant une partie de cavité (7) entre le support (2) et un corps de composant (1), dans lequel ledit support (2) est assemblé au corps de composant (1), de sorte qu'une partie d'extrémité (3a) dudit bourrelet (3) fait face au corps de composant (1), dans lequel la partie de cavité (7) est ouverte vers l'extérieur par un trou (6),
**caractérisé en ce que** :
ledit trou (6) est prévu au niveau de la partie incurvée de la partie d'extrémité (3a) du bourrelet (3) et pénètre dans la partie d'extrémité (3a) dudit bourrelet (3), de sorte que le liquide de placage peut s'écouler par le trou (6) lorsque le support (2) assemblé et le corps de composant (1) sont planqués.

2. Composant comprenant un support (2) selon la revendication 1, **caractérisé en ce que** l'on forme une largeur dudit trou (6) non inférieure à une largeur interne dudit bourrelet (3).
